# EUROPÄISCHE PATENTSCHRIFT

(11) **EP 1 870 669 B1**
(45) Veröffentlichungstag und Bekanntmachung des Hinweises auf die Patenterteilung: **09.02.2011**
(21) Anmeldenummer: 07011651.2
(22) Anmeldetag: 14.06.2007
(51) Int. Cl.: G01C 21/16, G01C 25/00

(54) **Verfahren zur Überprüfung einer inertialen Messeinheit von Fahrzeugen, insbesondere von Luftfahrzeugen, im stationären Zustand**
Method for checking the inert measuring unit of vehicles, in particular of aircrafts, in the stationary state
Procédé de surveillance de l'unité de mesure d'inertie de véhicules, en particulier d'aéronefs en état stationnaire

(30) Priorität: 24.06.2006 DE 102006029148
(43) Veröffentlichungstag der Anmeldung: 26.12.2007
(73) Patentinhaber: LFK-Lenkflugkörpersysteme GmbH, 86529 Schrobenhausen (DE)
(72) Erfinder: Grabmeier, Michael, 83022 Rosenheim (DE)
(74) Vertreter: Hummel, Adam

(56) Entgegenhaltungen:
- US-A1- 2004 133 346
- DOROBANTU: "Simulation des Verhaltens einer low-cost Strapdown-IMU unter Laborbedingungen" 1999, INSTITUT FÜR ASTRONOMISCHE UND PHYSIKALISCHE GEODÄSIE IAPG / FESG NO. 6, TECHNISCHE UNIVERSITÄT MÜNCHEN , XP002481767 ISSN: 1437-8280 ISBN: 3-934205-05-4 Gefunden im Internet: URL:http://tau.fesg.tu-muenchen.de/~iapg/w eb/veroeffentlichung/schriftenreihe/iapg_f esg_rpt_06.pdf> * Abbildung 2.2 *

## Beschreibung

### TECHNISCHES GEBIET

Die vorliegende Erfindung betrifft ein Verfahren zur Überprüfung einer inertialen Messeinheit von Fahrzeugen, insbesondere von Luftfahrzeugen, im stationären Zustand nach dem Oberbegriff des Patentanspruchs 1.

### STAND DER TECHNIK

Insbesondere bei unbemannten Flugkörpern bildet die inertiale Messeinheit den Basissensor einer Navigationscomputer-Anordnung und eines damit verbundenen Steuersystems. Fahrzeuge und insbesondere Luftfahrzeuge sind heute zumeist mit satellitengestützten, inertialen Navigationssystemen (zum Beispiel einem GPS-System) ausgerüstet, deren Genauigkeit bei Ausfall der Satelliten-Stützung von der Güte der von der inertialen Messeinheit ermittelten Messwerte abhängt.

Somit ist die Minimierung der Messfehler der inertialen Messeinheit anzustreben, um eine ausreichend hohe Genauigkeit der Navigationsergebnisse zu gewährleisten. Dazu werden inertiale Messeinheiten nach der Fertigung kalibriert.

Insbesondere dann, wenn inertiale Messeinheiten für einen längeren Zeitraum nicht in Betrieb gewesen sind oder seit einer durchgeführten Kalibrierung Erschütterungen, zum Beispiel beim Transport, ausgesetzt gewesen sind, kann sich die Messgenauigkeit der inertialen Messeinheit erfahrungsgemäß verschlechtern. Es ist daher anzustreben, die Funktionsfähigkeit und die Messgenauigkeit einer inertialen Messeinheit vor deren Einsatz überprüfen zu können, ohne dass dazu eine entsprechende Prüfeinrichtung, wie sie für die Kalibrierung einer inertialen Messeinheit vorgesehen ist, zur Verfügung steht. Insbesondere bei inertialen Messeinheiten, die in unbemannte Flugkörper eingebaut sind, ist ein derartiger Test vor dem Einsatz eines damit ausgerüsteten unbemannten Flugkörpers geboten, um zu verhindern, dass der unbemannte Flugkörper aufgrund von Navigationsfehlern seine geplante Mission nicht oder nur unpräzise ausführen kann.

Bislang wurden bei der Integration einer inertialen Messeinheit in einen unbemannten Flugkörper lediglich die von der inertialen Messeinheit gemessene Absolutbeschleunigung und absolute Winkelgeschwindigkeit im Vergleich zur Erdbeschleunigung beziehungsweise zur Erdrotation ermittelt. Ansonsten wurde bislang ein Vergleich der von einer inertialen Messeinheit eines an einem fliegenden Trägerflugzeug angebrachten unbemannten Flugkörpers gemessenen Vertikalbewegung mit der vom Trägerflugzeug sensierten Vertikalbewegung durchgeführt.

Dieser bisher durchgeführte Vergleich war für eine genaue Aussage über die Messgenauigkeit der inertialen Messeinheit entweder zu ungenau oder erfolgte erst dann, wenn der mit der inertialen Messeinheit ausgestattete Flugkörper bereits mit seinem Trägerflugzeug unterwegs gewesen ist.

Aus der DE 197 57 333 C1 ist ein Verfahren zur selbsttätigen, schnellen Kalibrierung einer bordautonomen Messung eines Geschwindigkeitsvektors bekannt, bei welchem die automatische Kalibrierung eines Geschwindigkeitsgebers im operationellen Betrieb mittels einer externen Geschwindigkeitsreferenz erfolgt. Diese Kalibrierung funktioniert nur bei Bewegung, also erst nach dem Start des Luftfahrzeugs, und nicht im stationären Zustand.

Die US 2004/0133346 A1 offenbart die Ausführung eines Strapdown-Algorithmus in Verbindung mit einer Fehlerabschätzung mittels eines Kalmanfilters. Der Kalmanfilter liefert anhand der Fehlerabschätzung Korrekturwerte für ein Navigationssystem. Diese Korrekturwerte werden dann wiederum dem Strapdown-Algorithmus zur weiteren Verarbeitung zur Verfügung gestellt.

### DARSTELLUNG DER ERFINDUNG

Aufgabe der vorliegenden Erfindung ist es daher, ein Verfahren zur Überprüfung einer inertialen Messeinheit von Fahrzeugen, insbesondere von Luftfahrzeugen, anzugeben, welches bereits im stationären Zustand der inertialen Messeinheit vor oder nach der Integration der inertialen Messeinheit in das Fahrzeug eine zuverlässige Aussage über die Messgenauigkeit der inertialen Messeinheit liefert und so gestattet, zu entscheiden, ob die inertiale Messeinheit einsetzbar ist oder nicht.

Diese Aufgabe wird durch das Verfahren mit den Merkmalen des Patentanspruchs 1 gelöst.

Zur Durchführung eines erfindungsgemäßen Verfahrens zur Überprüfung einer inertialen Messeinheit von Fahrzeugen, insbesondere von Luftfahrzeugen, im stationären Zustand, weist die inertiale Messeinheit zumindest einen Beschleunigungssensor, der ein translatorisches Beschleunigungssignal liefert, und zumindest einen Drehratensensor, der ein Drehratensignal liefert, auf. Die inertiale Messeinheit ist darüber hinaus mit einer Navigationscomputer-Anordnung mit zumindest einem Computer verbunden, die ein erstes funktionales Element, das von Computerhardware oder von Software gebildet sein kann, aufweist, welches das vom Beschleunigungssensor gelieferte translatorische Beschleunigungssignal und das vom Drehratensensor gelieferte Drehratensignal als Eingangsdaten empfängt und verarbeitet. Die Navigationscomputer-Anordnung weist außerdem ein zweites funktionales Element, das ebenfalls von Computerhardware oder von Software gebildet sein kann, auf, welches Eingangsdaten von der ersten Rechnereinheit empfängt und verarbeitet, und sie weist ein drittes funktionales Element, das auch von Computerhardware oder von Software gebildet sein kann, auf, welches die Eingangsdaten von der inertialen Messeinheit, vom ersten funktionalen Element und vom zweiten funktionalen Element empfängt und verarbeitet und Steuersignale an das zweite funktionale Element (30) liefert. In dieser Anordnung aus einer Navigationscomputer-Anordnung und der damit verbundenen inertialen Messeinheit werden erfindungsgemäß die folgenden Verfahrensschritte ausgeführt:
a) Bereitstellung von Daten
   der aktuellen Position der inertialen Messeinheit und
   der aktuellen Euler-Winkel als Information über die aktuelle Orientierung der inertialen Messeinheit im Raum;
b) Initialisierung eines Strapdown-Algorithmus' mit den im Schritt a) bereitgestellten Daten der aktuellen Position, der aktuellen Euler-Winkel und der aktuellen Geschwindigkeit der inertialen Messeinheit relativ zur Erde im ersten funktionalen Element;
c) kontinuierliche Verarbeitung der translatorischen Beschleunigungsdaten und Drehratendaten der von der inertialen Messeinheit kontinuierlich gelieferten Signale im ersten funktionalen Element nach dem Strapdown-Algorithmus, um Daten für erdfeste Position, Geschwindigkeit und Euler-Winkel zu erhalten, und
c') kontinuierliche Lieferung dieser Daten an das zweite funktionale Element, d) kontinuierliche Verarbeitung der vom ersten funktionalen Element gelieferten Daten für Position, Geschwindigkeit und Euler-Winkel in dem vom zweiten funktionalen Element gebildeten Kalman-Filter zur Fehlerabschätzung und Ermittlung der Beschleunigungsfehler und der Drehratenfehler für alle Raumachsen,
e) Bildung von Beschleunigungs-Korrekturwerten aus den Beschleunigungsfehlern und von Drehraten-Korrekturwerten aus den Drehratenfehlern im zweiten funktionalen Element,
f) Lieferung der Beschleunigungs-Korrekturwerte und der Drehraten-Korrekturwerte an das erste funktionale Element zur Messwertkorrektur,
g) Wiederholung der Schritte c) bis f) für eine erste vorgegebene Zeitspanne, wobei die Beschleunigungs-Korrekturwerte und die Drehraten-Korrekturwerte in die kontinuierliche Verarbeitung im Schritt c) nach dem Strapdown-Algorithmus mit einfließen,
h) nach Ablauf der ersten vorgegebenen Zeitspanne Prüfung, ob sich die im Schritt d) ermittelten Beschleunigungsfehler und Drehratenfehler innerhalb vorgegebener Toleranzbereiche befinden und Ausgabe einer Fehlermeldung und Abbruch des Verfahrens, falls die Prüfung ergibt, dass zumindest einer der Fehler außerhalb des Toleranzbereichs liegt,
i) Abspeichern der sich ergebenden Daten der Beschleunigungsfehler mit deren Varianz und der Drehratenfehler mit deren Varianz in einer Speichereinheit und Fortführung des Verfahrens
j) Lieferung der sich aus der aktuellen kontinuierlichen Verarbeitung im Schritt c) ergebenden Daten für Position, Geschwindigkeit und Euler-Winkel an das dritte funktionale Element (40) und Stoppen der Fehlerschätzung des Kalman-Filters,
k) Berechnung der Euler-Winkel-Änderungen und der Geschwindigkeitsänderungen innerhalb einer zweiten vorgegebenen Zeitspanne aus den in Schritt j) gelieferten Daten,
l) Ermittlung von Beschleunigungs-Summenfehlern durch Addition der im Schritt i) abgespeicherten Beschleunigungsfehler und der im Schritt k) berechneten Geschwindigkeitsänderungen
   und Ermittlung von Drehraten-Summenfehlern durch Addition der im Schritt i) abgespeicherten Drehratenfehler und der im Schritt k) berechneten Euler-Winkel-Änderungen im dritten funktionalen Element (40),
m) Prüfung, ob sich die im Schritt I) ermittelten Beschleunigungs-Summenfehler und Drehraten-Summenfehler innerhalb vorgegebener Toleranzbereiche befinden, oder nicht.

Nach Durchführung einer die Schritte a) und b) umfassenden Initialisierungsphase werden in einer die Schritte c) bis g) aufweisenden sogenannten Alignment-Phase zur Aufrichtung der Navigation zunächst im ersten funktionalen Element, das von Computerhardware oder von Software gebildet sein kann, nach einem an sich bekannten Strapdown-Algorithmus (Titterton, D.H., Weston, J.L.: Strapdown inertial navigation technology, 2nd Edition, IEE Radar, Sonar, Navigation and Avionics - Series 5. IEE, 2004) die Position, die Geschwindigkeit und die die Orientierung im Raum beschreibenden Euler-Winkel der inertialen Messeinheit für alle drei Raumachsen ermittelt. Dann wird mit diesen Daten im einen an sich bekannten Kalman-Filter aufweisenden zweiten funktionalen Element, das ebenfalls von Computerhardware oder von Software gebildet sein kann, eine Fehlerschätzung durchgeführt. Die geschätzten Fehler werden dann an das erste funktionale Element zurückgeliefert und werden dort vom Strapdown-Algorithmus bei der Bestimmung von Position, Geschwindigkeit und Euler-Winkel berücksichtigt. Nach Ablauf der ersten vorgegebenen Zeitspanne und damit der Alignment-Phase erfolgt eine Prüfung daraufhin, ob sich die ermittelten Beschleunigungsfehler und Drehratenfehler innerhalb vorgegebener Toleranzbereiche befinden und es erfolgen die Ausgabe einer Fehlermeldung und der Abbruch des Verfahrens, falls die Prüfung ergibt, dass zumindest einer der Fehler außerhalb des Toleranzbereichs liegt. Anderenfalls werden die sich ergebenden Daten der Beschleunigungsfehler mit deren Varianz und der Drehratenfehler mit deren Varianz in einer Speichereinheit abgespeichert und es wird damit zu einer sogenannten Inertialphase übergegangen, die die Schritte i) bis 1) aufweist.

In der Inertialphase werden die sich aus der aktuellen kontinuierlichen Verarbeitung im Schritt c) ergebenden Daten für Position, Geschwindigkeit und Euler-Winkel - ohne dass eine Korrektur dieser Daten durch vom zweiten funktionalen Element ermittelte Korrekturwerte erfolgt - an ein drittes funktionales Element, das auch von Computerhardware oder von Software gebildet sein kann, geliefert. Aus diesen Daten werden dann die innerhalb der zweiten vorgegebenen Zeitspanne auftretenden Euler-Winkel-Änderungen und Geschwindigkeitsänderungen berechnet. Das dritte funktionale Element bildet dann einen Beschleunigungs-Summenfehler und einen Drehraten-Summenfehler und prüft, ob sich diese Fehler innerhalb eines jeweiligen vorgegebenen Toleranzbereichs befinden.

Ist dies der Fall, so ist diese inertiale Messeinheit einsatzfähig. Liegt zumindest einer dieser Summenfehler, der Beschleunigungs-Summenfehler oder der Drehraten-Summenfehler, außerhalb des jeweils vorgegebenen Toleranzbereichs, so ist diese inertiale Messeinheit nicht einsatzfähig. Das jeweilige Ergebnis kann durch eine Ausgabeeinrichtung angezeigt werden.

Die Ermittlung der Beschleunigungs-Summenfehler und der Drehraten-Summenfehler sowie die Prüfschritte werden für alle drei Raumachsen durchgeführt. Hierdurch wird ein besonders zuverlässiges Überprüfungsergebnis erzielt.

Mittels dieses erfindungsgemäßen Verfahrens kann auf einfache Weise mit Hilfe einer entsprechend ausgestatteten Navigationscomputer-Anordnung schnell und zuverlässig im stationären Zustand einer inertialen Messeinheit ermittelt werden, ob diese inertiale Messeinheit einsetzbar ist oder nicht. Es ist dazu nicht erforderlich, die inertiale Messeinheit auf besonderen Prüfständen anzuordnen, wie dies beispielsweise bei deren Kalibrierung (mittels Drehtisch oder Zentrifuge) der Fall ist. Das erfindungsgemäße Verfahren kann daher mit einer entsprechend ausgerüsteten Navigationscomputer-Anordnung auch an dem Ort durchgeführt werden, an dem die inertiale Messeinheit eingesetzt werden soll, beispielsweise auf einem Flugplatz kurz vor dem Einsatz eines mit einer inertialen Messeinheit ausgestatteten unbemannten Flugkörpers.

Weitere bevorzugte und vorteilhafte Ausgestaltungsmerkmale des erfindungsgemäßen Verfahrens sind Gegenstand der Unteransprüche.

Vorzugsweise wird die inertiale Messeinheit vor Durchführung des Schrittes a) annähernd horizontal ausgerichtet.

Bevorzugterweise wird während der im Schritt g) angegebenen Wiederholung nach einer vorgegebenen Zeit (vorzugsweise ca. 1 Minute nach Beginn der Wiederholung) im Schritt c) geprüft, ob der durch den Strapdown-Algorithmus berechnete Rollwinkel beziehungsweise der durch den Strapdown-Algorithmus berechnete Nickwinkel jeweils in einem vorgegebenen Toleranzbereich um 0° herum liegen. Vorzugsweise soll dieser Toleranzbereich ± 3° betragen.

Weiter bevorzugt wird, wenn während der im Schritt g) angegebenen Wiederholung nach Ablauf einer vorgegebenen Zeit (vorzugsweise ca. 1 Minute nach Beginn der Wiederholung) im Schritt c) geprüft wird, ob die durch den Strapdown-Algorithmus berechnete Geschwindigkeit relativ zur Erde in einem vorgegebenen Toleranzbereich um 0 m/sec. herum liegt. Vorzugsweise beträgt dieser Toleranzbereich ± 0,3 m/sec..

Vorzugsweise wird im Schritt h) auch geprüft, ob die im zweiten funktionalen Element vom Kalman-Filter ermittelte Genauigkeit des Beschleunigungsfehlers, vorzugsweise die Standardabweichung oder die Varianz, für die vertikale Beschleunigungs-Sensor-Achse unter einem vorgegebenen Schwellenwert liegt.

Weiter vorzugsweise wird im Schritt h) auch geprüft, ob die im zweiten funktionalen Element vom Kalman-Filter ermittelte Genauigkeit des Drehratenfehlers, vorzugsweise die Standardabweichung oder die Varianz, für die jeweilige horizontale Drehraten-Sensor-Achse unter einem definierten Schwellenwert liegt.

Schließlich wird weiter vorzugsweise im Schritt h) auch geprüft, ob der jeweilige Betrag der vom zweiten funktionalen Element im Kalman-Filter ermittelten geschätzten Messfehler für die vertikale Beschleunigungs-Sensor-Achse unterhalb eines jeweiligen vorgegebenen Schwellenwerts liegt.

Es wird weiter vorzugsweise im Schritt h) auch geprüft, ob die Beträge der vom zweiten funktionalen Element im Kalman-Filter ermittelten geschätzten Messfehler für die jeweilige horizontale Drehraten-Sensor-Achse unterhalb eines jeweiligen vorgegebenen Schwellenwerts liegen.

Es wird auch bevorzugt, wenn im Schritt h) auch geprüft wird, ob die im zweiten funktionalen Element vom Kalman-Filter ermittelte Fehlergenauigkeit, vorzugsweise die Standardabweichung oder die Varianz, für die jeweilige horizontale Beschleunigungs-Sensor-Achse in einem vorgegebenen ToleranzBereich um den jeweiligen im Schritt b) verwendeten Initialwert liegt.

Im Schritt h) wird zudem weiter vorzugsweise geprüft, ob die im zweiten funktionalen Element vom Kalman-Filter ermittelte Fehlergenauigkeit, vorzugsweise die Standardabweichung oder die Varianz, für die vertikale Drehraten-Sensor-Achse in einem vorgegebenen Toleranzbereich um den jeweiligen im Schritt b) verwendeten Initialwert liegen.

Vorzugsweise werden im Schritt i) auch Euler-Winkel-Varianzen abgespeichert.

Es wird außerdem bevorzugt, wenn die im Schritt k) berechnete Geschwindigkeits-Änderung in das Achsensystem der inertialen Messeinheit transformiert und um einen Erdbeschleunigungs-Anteil, der sich aus den ermittelten Drehraten-Fehlern ergibt, korrigiert wird.

Nach der abschließenden Prüfung im Schritt m) werden vorzugsweise die folgenden zusätzlichen Schritte durchgeführt:
- m1): Berechnung der Differenz zwischen der vom Beschleunigungssensor durchschnittlich gemessenen Gesamt-Beschleunigung und der Erdbeschleunigung,
- m2): Berechnung des resultierenden Gesamt-Beschleunigungs-Fehlers aufgrund der Beschleunigungs-Summenfehler,
- m3): Prüfung, ob sich die Differenz zwischen der im Schritt m1) errechneten Differenz und dem im Schritt m2) errechneten Gesamt-Beschleunigungs-Fehler innerhalb eines vorgegebenen Toleranzbereichs befindet.

Schließlich werden alternativ dazu oder zusätzlich nach dem Prüfschritt m) vorzugsweise die folgenden zusätzlichen Prüfschritte durchgeführt:
m1') Berechnung der Differenz zwischen der vom Drehratenssensor durchschnittlich gemessenen Gesamt-Drehrate und der Erdrotation,
m2') Berechnung des resultierenden Gesamt-Drehraten-Fehlers aufgrund der Drehraten-Summenfehler,
m3') Prüfung, ob sich die Differenz zwischen der im Schritt m1') errechneten Differenz und dem im Schritt m2') errechneten Gesamt-Drehraten-Fehler innerhalb eines vorgegebenen Toleranzbereichs befindet.

Wenn wenigstens eine der in den Schritten m), m3) oder m3') durchgeführten Prüfungen scheitert, wird vorzugsweise der Verfahrensablauf abgebrochen und eine entsprechende Fehlermeldung wird ausgegeben.

Alternativ oder auch zusätzlich dazu kann dann, wenn alle im Schritt m) beziehungsweise in den Schritten m) und m3) oder m) und m3') beziehungsweise in den Schritten m), m3) und m3') durchgeführten Prüfungen erfolgreich durchlaufen wurden, eine entsprechende Freigabemeldung ausgegeben werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: den schematischen Aufbau einer Navigationscomputer-Anordnung mit angeschlossener inertialer Messeinheit zur Durchführung des erfindungsgemäßen Verfahrens;
- Fig. 2: ein Flussdiagramm des erfindungsgemäßen Verfahrens.

### DARSTELLUNG VON BEVORZUGTEN AUSFÜHRUNGSBEISPIELEN

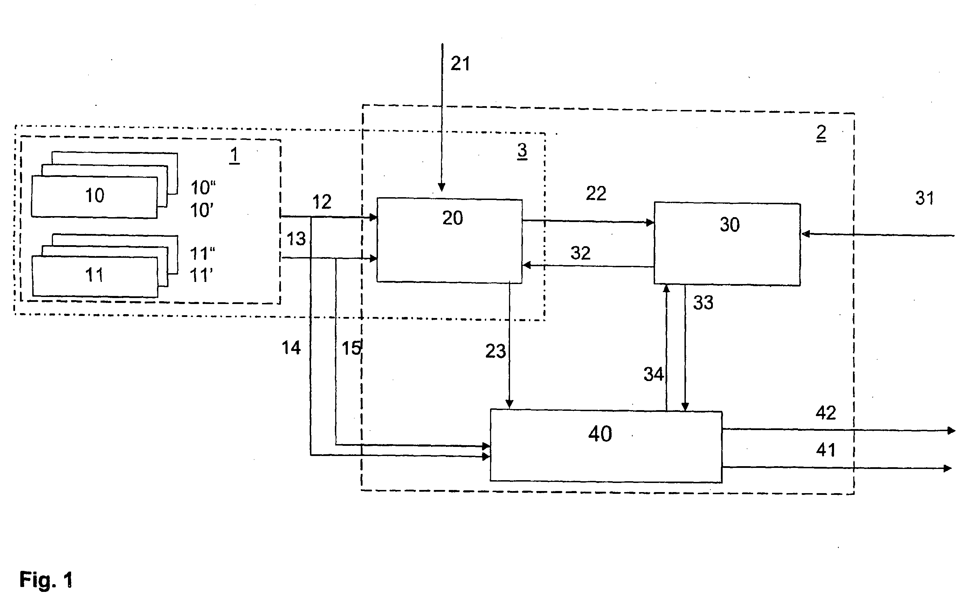

In Fig. 1 ist schematisch der Aufbau einer inertialen Messeinheit 1 sowie einer mit dieser verbundenen Navigationscomputer-Anordnung 2 dargestellt.

Die inertiale Messeinheit 1 weist für jede Raumachse einen Beschleunigungssensor 10, 10', 10" auf. Des weiteren enthält die inertiale Messeinheit 1 für jede Raumachse einen Drehratensensor 11, 11', 11".

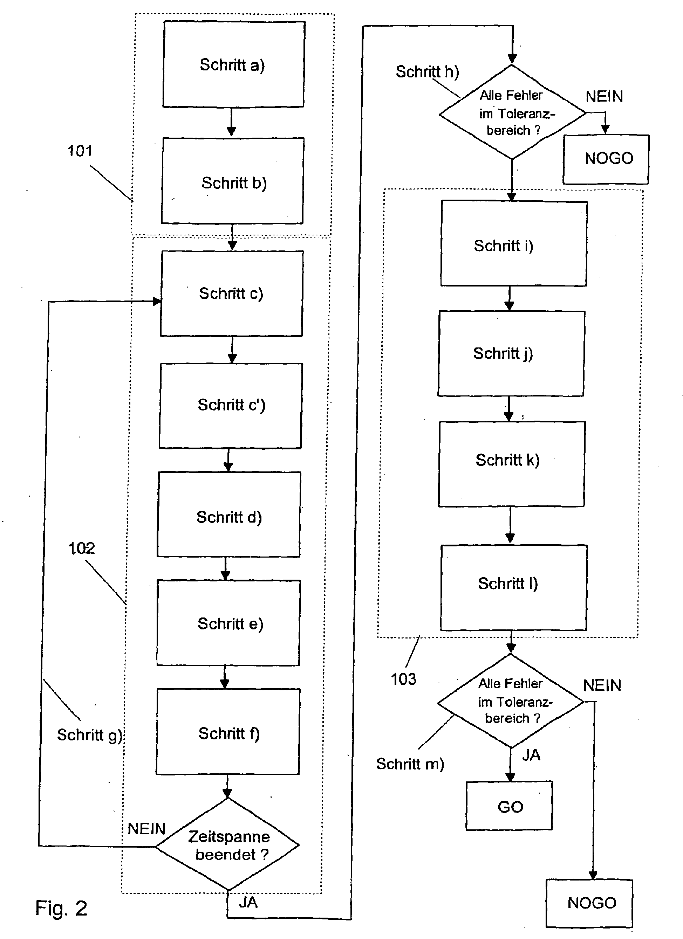

Die Navigationscomputer-Anordnung 2 enthält ein erstes funktionales Element 20, ein zweites funktionales Element 30 und ein drittes funktionales Element 40. Die funktionalen Elemente 20, 30, 40 können von Computerhardware oder von Software gebildet sein. Das erste funktionale Element 20 ist über eine erste, die Beschleunigungsdaten übertragende Datenleitung 12 sowie über eine zweite, die Drehratendaten übertragende Datenleitung 13 mit der inertialen Messeinheit 1 verbunden. Das erste funktionale Element 20 empfängt zudem über eine erste externe Datenleitung 21 von entsprechenden externen Gebern Daten über die aktuelle Position, die aktuelle Geschwindigkeit und die aktuellen Euler-Winkel der inertialen Messeinheit 1. Diese aktuellen Daten werden auch als Initialdaten bezeichnet und dienen der Initialisierung eines im ersten funktionalen Element 20 ablaufenden Programms, das so programmiert ist, dass die über die erste Datenleitung 12 eingehenden Beschleunigungsdaten sowie die über die zweite Datenleitung 13 eingehenden Drehratendaten mittels eines Strapdown-Algorithmus verarbeitet werden, wie er beispielsweise in Abbildung 2.2 der Druckschrift "Simulation des Verhaltens einer low-cost Strapdown IMU unter Laborbedingungen" von Raul Dorobantu (ISBN 3934205054) dargestellt und unter Bezugnahme auf diese Abbildung beschrieben worden ist. Als Ergebnis liefert der im ersten funktionalen Element ablaufende Strapdown-Algorithmus Daten über die Position, die Geschwindigkeit und die Euler-Winkel der inertialen Messeinheit 1 auf der Grundlage der von der inertialen Messeinheit 1 an das erste funktionale Element 20 gelieferten Beschleunigungsdaten und Drehratendaten. Die inertiale Messeinheit 1 und das erste funktionale Element 20 der Navigationscomputer-Anordnung 2 bilden daher gemeinsam ein inertiales Navigationssystem 3.

Die im ersten funktionalen Element 20 ermittelten Daten für Position, Geschwindigkeit und Euler-Winkel der inertialen Messeinheit 1 werden über eine dritte Datenleitung 22 vom ersten funktionalen Element 20 an das zweite funktionale Element 30 der Navigationscomputer-Anordnung 2 geliefert.

Das zweite funktionale Element 30 erhält über eine zweite externe Datenleitung 31 von einem (nicht gezeigten) externen Geber aktuelle Positionsdaten der inertialen Messeinheit 1 sowie die Fehlervarianzen für diese aktuellen Positionsdaten. Das zweite funktionale Element 30 ist dabei so programmiert, dass es als Kalman-Filter arbeitet. Ein Kalman-Filter ist allgemein bekannt und ist ein stochastischer Zustandsschätzer für dynamische Systeme. Er kann Zustände oder Parameter eines Systems aufgrund von teils redundanten Messungen, die von Rauschen überlagert sind, schätzen, wobei der mittlere quadratische Fehler minimiert wird. Ein entscheidender Vorteil des Kalman-Filters gegenüber anderen stochastischen Schätzverfahren ist der iterative Ablauf des im Kalman-Filter ablaufenden Rechenprozesses. Dazu wird zunächst auf der Basis von Systemeingangsdaten der wahrscheinlichste Ausgangswert vorhergesagt und dieser Wert wird dann mit einem tatsächlich gemessenen Ausgangswert verglichen. Die Differenz der beiden Werte wird linear gewichtet und dient der Korrektur des aktuellen Zustandes.

Im vorliegenden Anwendungsfall dient der Kalman-Filter dazu, während einer sogenannten Alignment-Phase sowohl die Fehler, mit denen die durch den Strapdown-Algorithmus berechneten Daten für Position, Geschwindigkeit und Euler-Winkel behaftet sind, als auch Sensor-Messfehler zu schätzen. Zusätzlich zu den geschätzten Fehlern werden jeweils Varianzen errechnet, um eine Aussage über die Genauigkeit der Fehlerschätzung treffen zu können.

Die im zweiten funktionalen Element 30 aufgrund der ermittelten Fehler bestimmten Korrekturdaten zur Beschleunigungskorrektur und zur Drehratenkorrektur werden während der Alignment-Phase über eine vierte Datenleitung 32 vom zweiten funktionalen Element 30 zurück an das erste funktionale Element 20 geleitet und fließen während der Alignment-Phase in den im ersten funktionalen Element 20 ablaufenden Strapdown-Algorithmus als Korrekturdaten ein. Hierdurch wird die Genauigkeit der vom Strapdown-Algorithmus im ersten funktionalen Element 20 ermittelten und an das zweite funktionale Element 30 über die dritte Datenleitung 22 weitergeleiteten Daten für Position, Geschwindigkeit und Euler-Winkel der inertialen Messeinheit 1 im Laufe der Zeit verbessert.

Nach Ablauf der ersten vorgegebenen Zeitspanne werden die vom Kalman-Filter im zweiten funktionalen Element 30 ermittelten Beschleunigungsfehler und die Drehratenfehler für jede der drei Achsen sowie deren jeweilige Varianzen und die Euler-Winkel-Varianzen gespeichert und diese gespeicherten Werte werden über eine fünfte Datenleitung 33 von der zweiten Rechnereinheit 30 an das dritte funktionale Element 40 weitergeleitet.

Das dritte funktionale Element 40 ist so programmiert, dass es eine Auswertefunktion für die empfangenen Daten und eine Steuerungsfunktion für eine Ausgabeeinrichtung sowie für das zweite funktionale Element 30 durchführen kann. Dazu meldet das dritte funktionale Element 40 über eine sechste Datenleitung 34 die aktuell vorgegebene Betriebsart (Initialisierungsphase, Alignment-Phase oder Inertialphase) der Navigationscomputer-Anordnung 2 an das zweite funktionale Element 30, wodurch das zweite funktionale Element 30 beispielsweise Information über den Beginn, die Dauer und das Ende der vorgegebenen, die Dauer der Alignment-Phase bestimmenden ersten Zeitspanne erhält, an dessen Ende die Beschleunigungsfehler und die Drehratenfehler sowie deren Varianzen und die Euler-Winkel-Varianzen an das dritte funktionale Element 40 aus dem Speicher des zweiten funktionale Elements 30 zu übergeben sind und die Rückleitung der Korrekturdaten über die vierte Datenleitung 32 an das erste funktionale Element 20 einzustellen sind.

Das dritte funktionale Element 40 erhält über eine siebte Datenleitung 23 vom ersten funktionalen Element 20 zudem Daten der vom Strapdown-Algorithmus ermittelten Geschwindigkeiten in Richtung der drei Raumachsen sowie der vom Strapdown-Algorithmus ermittelten Euler-Winkel und der Erdbeschleunigung. Weiterhin erhält das dritte funktionale Element 40 über eine achte Datenleitung 14 die von den Beschleunigungssensoren 10, 10', 10" der inertialen Messeinheit 1 ermittelten Beschleunigungsdaten in Richtung der drei Raumachsen sowie über eine neunte Datenleitung 15 die von den Drehraten-Sensoren, 11, 11', 11" der inertialen Messeinheit 1 ermittelten Drehratendaten um die jeweiligen Raumachsen.

Im dritten funktionalen Element 40 werden während der auf die Alignment-Phase folgenden Inertialphase zunächst die jeweiligen innerhalb der zweiten vorgegebenen Zeitspanne erfolgenden Euler-Winkel-Änderungen sowie Geschwindigkeits-Änderungen berechnet und dann werden Beschleunigungs-Summenfehler sowie Drehraten-Summenfehler gebildet. Anschließend wird im dritten funktionalen Element 40 für jede der drei Raumachsen überprüft, ob sich der jeweils ermittelte Beschleunigungs-Summenfehler und der jeweils ermittelte Drehraten-Summenfehler innerhalb eines jeweils vorgegebenen Toleranzbereichs befinden. Das Ergebnis dieser Prüfung wird vom dritten funktionalen Element 40 über eine erste Datenausgabeleitung 41 aus der Navigationscomputer-Anordnung 2 zur weiteren Verwendung ausgegeben, beispielsweise um eine entsprechende Ausgabeeinrichtung anzusteuern. Weiterhin werden vom dritten funktionalen Element 40 die ermittelten Beschleunigungs-Summenfehler für jede der drei Raumachsen sowie die ermittelten Drehraten-Summenfehler für jede der drei Raumachsen über eine zweite Datenausgabeleitung 42 aus der Navigationscomputer-Anordnung 2 nach außen zur weiteren Verwendung ausgegeben.

In Fig. 2 ist ein Flussdiagramm eines bevorzugten Ausführungsbeispiels des erfindungsgemäßen Verfahrens wiedergegeben.

Zunächst werden im Schritt a) die aktuelle Position der inertialen Messeinheit 1 und der aktuellen Euler-Winkel als Information über die aktuelle Orientierung der inertialen Messeinheit 1 im Raum, also die Winkellagen um die jeweiligen Raumachsen, mittels geeigneter externer Messeinrichtungen bestimmt. Dazu kann die aktuelle Position der inertialen Messeinheit beispielsweise mit einem Satellitennavigations-Messgerät bestimmt werden oder von einem Testsystem geliefert werden. Vorzugsweise wird die inertiale Messeinheit horizontal ausgerichtet, so dass deren Winkelposition um die beiden horizontalen Achsen (Rollachse und Nickachse) jeweils 0° beträgt. Die Orientierung der inertialen Messeinheit um die Vertikalachse (Gierachse) kann beispielsweise mittels eines Kompass' durchgeführt werden. Die so ermittelten Daten werden dann von den externen Messeinrichtungen an das erste funktionale Element 20 geliefert, wo im Schritt b) eine Initialisierung des Strapdown-Algorithmus' mit diesen Daten der aktuellen Position und der aktuellen Euler-Winkel sowie der aktuellen Geschwindigkeit der inertialen Messeinheit 1 relativ zur Erde erfolgt. Da das vorliegende Verfahren im stationären Zustand durchgeführt wird, beträgt die aktuelle erdfeste Geschwindigkeit der inertialen Messeinheit 0 m/sec. Die Schritte a) und b) bestimmen die Initialisierungsphase 101 des Verfahrens, was durch die gestrichelte Linie 101 symbolisiert wird.

Anschließend werden im Schritt c) die von der inertialen Messeinheit 1 kontinuierlich gelieferten translatorischen Beschleunigungsdaten und die Drehratendaten im ersten funktionalen Element 20 nach dem Strapdown-Algorithmus kontinuierlich verarbeitet, um Daten für Position, Geschwindigkeit und Euler-Winkel zu erhalten.

Im Schritt c') werden dann die im Schritt c) ermittelten Daten für Position, Geschwindigkeit und Euler-Winkel vom ersten funktionalen Element 20 über die dritte Datenleitung 22 an das zweite funktionale Element 30 geliefert.

Dort erfolgt im Schritt d) die kontinuierliche Verarbeitung der vom ersten funktionalen Element 20 gelieferten Daten in einem im zweiten funktionalen Element 30 gebildeten Kalman-Filter zur Fehlerabschätzung, wobei Beschleunigungsfehler und Drehratenfehler vom Kalman-Filter geschätzt werden.

Anschließend werden im Schritt e) im zweiten funktionalen Element 30 Beschleunigungs-Korrekturwerte aus den Beschleunigungsfehlern gebildet und es werden Drehraten-Korrekturwerte aus den Drehratenfehlern gebildet.

Die Beschleunigungs-Korrekturwerte und die Drehraten-Korrekturwerte werden im Schritt f) vom zweiten funktionalen Element 30 über die vierte Datenleitung 32 an das erste funktionale Element 20 zurückgeliefert und fließen dort als Korrekturparameter in den Strapdown-Algorithmus ein.

Für die Dauer der ersten vorgegebenen Zeitspanne werden dann im Schritt g) die Schritte c) bis f) wiederholt, wobei die jeweils neu bestimmten Beschleunigungs-Korrekturwerte und die jeweils neu bestimmten Drehraten-Korrekturwerte in die Verarbeitung im Strapdown-Algorithmus des Schritts c) mit einfließen.

Die Schritte c) bis g) bestimmen die Alignment-Phase des Verfahrens, was durch die gestrichelte Linie 102 symbolisiert ist.

Ist die erste vorgegebene Zeitspanne abgelaufen, also die Alignment-Phase beendet, wird im Schritt h) überprüft, ob sich die im Schritt d) ermittelten Beschleunigungsfehler und Drehratenfehler innerhalb vorgegebener Toleranzbereiche befinden, und es erfolgt die Ausgabe einer Fehlermeldung und der Abbruch des Verfahrens, falls die Prüfung ergibt, dass zumindest einer der Fehler außerhalb des Toleranzbereichs liegt.

Anderenfalls beginnt die durch die Schritte i) bis l) bestimmte Inertialphase des Verfahrens, was durch die gestrichelte Linie 103 symbolisiert ist.

Dabei werden im Schritt i) die sich ergebenden Daten der jeweiligen Beschleunigungsfehler zusammen mit deren Varianz und die Daten der jeweiligen Drehratenfehler zusammen mit deren Varianz sowie vorzugsweise auch die Euler-Winkel-Varianzen in einer Speichereinheit abgespeichert.

Im Schritt j) erfolgt dann die Lieferung der sich aus der aktuellen kontinuierlichen Verarbeitung im Schritt c) ergebenden Daten für Position, Geschwindigkeit und Euler-Winkel an das dritte funktionale Element (40) über die siebte Datenleitung 23.

Im Schritt k) werden die jeweiligen Euler-Winkel-Änderungen und die jeweiligen Geschwindigkeitsänderungen, die innerhalb einer weiteren vorgegebenen Zeitspanne auftreten, aus den im Schritt j) gelieferten Daten berechnet.

Im Schritt I) wird anschließend für jede Raumachse ein Beschleunigungs-Summenfehler durch Addition des im Schritt i) abgespeicherten jeweiligen Beschleunigungsfehlers und der im Schritt k) berechneten jeweiligen Geschwindigkeitsänderung errechnet. Weiterhin wird im Schritt I) für jede Raumachse ein Drehraten-Summenfehler durch Addition des im Schritt i) abgespeicherten jeweiligen Drehratenfehlers und der im Schritt k) berechneten Euler-Winkel-Änderungen errechnet.

Anschließend wird im Schritt m) geprüft, ob sich die im Schritt l) ermittelten Beschleunigungs-Summenfehler und Drehraten-Summenfehler innerhalb eines vorgegebenen Toleranzbereichs befinden, oder nicht.

Ergibt die Prüfung im Schritt m), dass sich die Beschleunigungs-Summenfehler und die Drehraten-Summenfehler innerhalb des vorgegebenen Toleranzbereichs befinden, so erfolgt eine Freigabe "GO" der überprüften inertialen Messeinheit. Ergibt die Prüfung im Schritt m), dass mindestens einer der ermittelten Fehler außerhalb des vorgegebenen Toleranzbereichs liegt, erfolgt eine entsprechende Fehlerausgabe "NOGO".

Im stationären Zustand der inertialen Messeinheit kann diese nur die Erdbeschleunigung als starken Stimulus und die Erdrotation als schwachen Stimulus sensieren. Wenn die Position und die Orientierung der inertialen Messeinheit genau bekannt sind und der im ersten funktionalen Element ablaufende Strapdown-Algorithmus mit diesen bekannten Werten initialisiert wird, wobei der Kalman-Filter in der Alignment-Phase periodisch mit extern gemessenen, bekannten Positionsdaten versorgt wird und wobei die Geschwindigkeiten in den jeweiligen drei Raumachsenrichtungen 0 m/sec. betragen, da die inertiale Messeinheit stationär ist, und wenn nach der Initialisierung die von der inertialen Messeinheit gelieferten Messwerte vom Strapdown-Algorithmus verarbeitet werden, können die nachstehend aufgeführten Navigationswerte durch den Kaiman-Filter in dieser Situation beobachtet und somit abgeschätzt werden:
- Beschleunigungsmessfehler in Richtung der Erdbeschleunigung,
- Drehratenmessfehler senkrecht zur Richtung der Erdbeschleunigung,
- Roll- und Nickwinkel der inertialen Messeinheit.

Die folgenden Navigationswerte sind in dieser Situation nicht vom Kalman-Filter beobachtbar und abschätzbar:
- Beschleunigungsmessfehler senkrecht zur Richtung der Erdbeschleunigung,
- Drehratenmessfehler in Richtung der Erdbeschleunigung,
- Gierwinkel der inertialen Messeinheit.

Es können daher mit dem erfindungsgemäßen Verfahren und der in dieser Anmeldung beschriebenen erfindungsgemäßen Vorrichtung bestehend aus der inertialen Messeinheit 1 und der Navigationscomputer-Anordnung 2 nach einer vorgegebenen Zeitspanne die nachfolgend aufgeführten Ergebnisse erzielt werden.

Aufgrund der bei einer horizontal ausgerichteten inertialen Messeinheit auf die - vertikale - Gierachse Z wirkenden Erdbeschleunigung kann der Kalman-Filter den Offset- und den Skalenfaktor-Fehler des Z-Beschleunigungssensors der inertialen Messeinheit gut beobachten und abschätzen. Die dazu ermittelte Varianz wird eine hohe Genauigkeit des geschätzten Fehlers anzeigen.

Für die in Richtung der - horizontalen - Rollachse X und der - horizontalen - Nickachse Y wirkenden Beschleunigungssensoren können keine relevanten Fehlerschätzungen erfolgen. Folglich müssen die zugehörigen Fehlervarianzen nahe den Initialwerten verharren.

Aufgrund der Anteile der Erdrotation, die auf die horizontalen Achsen X, Y der inertialen Messeinheit wirken, kann der Kalman-Filter im zweiten funktionalen Element 30 den Offset- und den Skalenfaktor-Fehler der X- und Y-Drehratensensoren in beschränktem Umfang schätzen, da auf diese Sensoren ein schwacher Stimulus (Erdrotation) wirkt. Die dazu ermittelten Varianzen sind deutlich niedriger als die Initialwerte.

Für den Z-Drehratensensor erfolgt keine relevante Fehlerschätzung. Folglich wird die zugehörige Fehlervarianz nahe den Initialwerten verharren.

Die durch den Kalman-Filter geschätzten Varianzen der vom Strapdown-Algorithmus errechneten Roll- und Nickwinkel werden eine hohe Genauigkeit anzeigen. Wenn sich der Kalman-Filter eingeschwungen hat, das heißt, wenn die zugehörigen Fehlervarianzen jeweils einen im wesentlichen stabilen Wert erreicht haben, liegen für den Z-Beschleunigungssensor und für die X- und Y-Drehratensensoren der inertialen Messeinheit verwertbare Messfehler-Schätzwerte vor. Die Einschwingdauer des Kalman-Filters kann durch entsprechende Parametrisierung (z.B. Rauschen der Messwerte der inertialen Messeinheit, Varianzen der externen Positionsinformation, untere Grenzwerte der Kovarianz-Matrix) von geringem Rauschen der Messwerte der inertialen Messeinheit oder der über die zweite externe Datenleitung 31 zugeführten externen Positionsinformation oder auch dann, wenn diese externe Positionsinformation eine hohe Genauigkeit aufweist, verkürzt werden. Demzufolge kann an dieser Stelle bereits eine erste Schwellenwertprüfung der Beträge dieser Messfehler-Schätzwerte erfolgen. Da diese geschätzten Messfehler als Korrekturwerte in den im ersten funktionalen Element ablaufenden Strapdown-Algorithmus zurückgeführt werden, fließen diese bei jedem Berechnungszyklus der kinematischen Bewegungsgleichungen des Strapdown-Algorithmus mit ein und korrigieren damit auf immer bessere Weise die von der inertialen Messeinheit an das erste funktionale Element 20 gelieferten Messdaten.

Der Einschwingzustand des Kalman-Filters kann auch an den durch ihn berechneten Varianzen für den Roll- und Nickwinkel abgelesen werden, da diese Winkel durch die wirkende Erdbeschleunigung gut beobachtet werden können. Zudem kann dann mit diesen Winkeln geprüft werden, ob sich die inertiale Messeinheit 1 in horizontaler Lage befindet.

Um auch die Messfehler für die X- und Y-Beschleunigungssensoren und für den Z-Drehratensensor schätzen zu können, wird nach Ablauf der ersten vorgegebenen Zeitspanne (Alignment-Phase) der Verfahrensablauf abgewandelt. Die in der Alignment-Phase erfolgende Fehlerschätzung des Kalman-Filters und damit die Fehlerkorrektur der Navigationsergebnisse des Strapdown-Algorithmus werden gestoppt, so dass sich in der danach stattfindenden Inertialphase in den von der inertialen Messeinheit gelieferten Messdaten noch enthaltene Fehler gänzlich über die kinematischen Bewegungsgleichungen auf die Navigationsergebnisse (Position, Geschwindigkeit und Euler-Winkel) auswirken können. Dabei wird nach einer längeren Beobachtungszeit der stationären, sich in horizontalem Zustand befindenden inertialen Messeinheit Folgendes auftreten:

Durch den Beschleunigungsmessfehler in Richtung der Z-Achse wird eine geringe Drift der ermittelten Geschwindigkeit in Richtung der Z-Achse auftreten, da für diese Richtung vorher eine signifikante Messfehlerschätzung erfolgte, die jetzt im Strapdown-Algorithmus wirkt. Somit wird hierdurch ein Restfehler für den Z-Beschleunigungssensor ermittelt.

Die Drehratenmessfehler-Korrektur um die X- und die Y-Achse bewirkt wenig Drift des Rollwinkels beziehungsweise des Nickwinkels, da für diese Richtungen vorher relevante Messfehlerschätzungen der X- und Y-Drehratensensoren erfolgten, welche jetzt im Strapdown-Algorithmus wirksam sind. Auf diese Weise werden Restfehler für die X- und Y-Drehratensensoren ermittelt.

In der Inertialphase werden die Messfehler der Drehratensensoren 11, 11' und 11" aus der jeweiligen Euler-Winkel-Änderung über die Zeit ermittelt, die seit Eintritt in die Inertialphase vergangen ist. Des weiteren werden in der Inertialphase die Messfehler der Beschleunigungssensoren 10, 10', 10" ermittelt, indem zunächst die erdfesten Geschwindigkeiten (in Richtung Nord, Ost und zum Erdmittelpunkt gerichtet) mittels der Euler-Winkel in das gerätefeste Achsen-System der inertialen Messeinheit transformiert werden. Dann werden die Änderungen dieser gerätefesten Geschwindigkeiten, nämlich deren Beschleunigung, über der Zeit seit Eintritt in die Inertialphase berechnet, wobei die errechneten, gerätefesten Beschleunigungen in X- und Y-Richtung um die Anteile der Erdbeschleunigung korrigiert werden, die sich aufgrund von X- und Y-Drehratenmessfehlern über die obige Geschwindigkeitstransformation aufbauen.

Die vorstehende Berechnungen für Drehraten- und Beschleunigungsmessfehler in der Inertialphase erfolgen, nachdem hinreichend Zeit in der Inertialphase verstrichen ist.

Nach Abschluss der Inertialphase werden für jede Achse und für jeden Sensor die Beschleunigungs- und Drehratenmessfehler, die jeweils in der Alignment-Phase und in der Initialisierungsphase ermittelt wurden, addiert, so dass für jeden Beschleunigungssensor und für jeden Drehratensensor ein Messfehlerwert vorliegt.

Der Betrag eines jeden Messfehlerwerts wird nun daraufhin geprüft, ob er eine definierte Toleranzschwelle überschreitet. So kann für jeden Sensor entschieden werden, ob der Messfehlerwert innerhalb oder außerhalb der vorgegebenen Toleranz liegt.

Weiterhin lassen sich vorzugsweise die geschätzten Beschleunigungsmessfehler unter Verwendung von Rohmessdaten der inertialen Messeinheit auf Plausibilität überprüfen. Dazu wird zunächst aufgrund der erhaltenen Fehler-Schätzergebnisse ein resultierender geschätzter Beschleunigungs-Messfehler ermittelt. Während des Navigations-Alignments, also während der Alignment-Phase, und während der Inertialphase wird der Wert der durchschnittlich durch die Beschleunigungssensoren der inertialen Messeinheit gemessenen resultierenden Roh-Gesamtbeschleunigung berechnet; dies erfolgt auf der Grundlage der Rohmessungen der inertialen Messeinheit, ohne dass diese vom Kalman-Filter korrigiert werden. Der Wert der Differenz zwischen dieser resultierenden Roh-Gesamtbeschleunigung und der im Strapdown-Algorithmus berechneten Erdbeschleunigung wird berechnet und stellt einen Roh-Messungsfehler dar. Die Differenz zwischen diesem Roh-Messungsfehler und dem resultierenden geschätzten Beschleunigungsmessfehler muss sich innerhalb eines definierten Toleranzbereichs befinden, damit das geforderte Plausibilitätskriterium für den geschätzten Beschleunigungsmessfehler erfüllt ist.

Auch die mit dem erfindungsgemäßen Verfahren geschätzten Drehratenmessfehler können unter Verwendung von Roh-Messwerten der inertialen Messeinheit auf Plausibilität überprüft werden. Dazu wird auf der Grundlage der Fehler-Schätzergebnisse ein resultierender geschätzter Drehraten-Messfehler (Schätz-Drehraten-Messfehler) ermittelt. Während des Navigations-Alignments (Alignment-Phase) und der Inertialphase wird der Wert der durchschnittlich durch die Drehratensensoren der inertialen Messeinheit gemessenen resultierenden Roh-Gesamtdrehrate berechnet, wozu die Rohmessungen der inertialen Messeinheit ohne Korrekturen durch das Kalman-Filter verwendet werden. Der Wert der Differenz zwischen dieser resultierenden Roh-Gesamtdrehrate und der Erdrotation wird berechnet und stellt einen Roh-Messungsfehler dar. Die Differenz zwischen diesem Roh-Messungsfehler und dem resultierenden Schätz-Drehraten-Messfehler muss sich innerhalb eines definierten Toleranzbereichs befinden, um das Plausibilitätskriterium für die geschätzten Drehraten-Messfehler zu erfüllen. Bevorzugte Toleranzen liegen bei ca. ± 0,5 mG beziehungsweise ± 0,5 °/h.

Das erfindungsgemäße Verfahren ermöglicht somit die Ermittlung von Offset- und Skalenfaktor-Fehlern für den Z-Beschleunigungssensor und auch für die X- und Y-Drehratensensoren der inertialen Messeinheit 1. Weiterhin kann der Offset-Fehler des X- und des Y-Beschleunigungssensors sowie auch des Z-Drehratensensors ermittelt werden.

Beispielhafte Werte für die in diesem Ausführungsbeispiel enthaltenen Toleranzen sind:
- Dauer der Alignment-Phase: ca. 5 bis 15 Minuten,
- Dauer der Inertialphase: 2 bis 10 Minuten,
- Toleranzschwelle für Beschleunigungssensorfehler: 1 bis 6 mG,
- Toleranzschwelle für Drehratensensor-Fehler 1 bis 6°/h.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: inertiale Messeinheit
- 2: Navigationscomputer-Anordnung
- 3: inertiales Navigationssystem
- 10: Beschleunigungssensor
- 10': Beschleunigungssensor
- 10": Beschleunigungssensor
- 11: Drehratensensor
- 11': Drehratensensor
- 11": Drehratensensor
- 12: erste Datenleitung
- 13: zweite Datenleitung
- 14: achte Datenleitung
- 15: neunte Datenleitung
- 20: erstes funktionales Element
- 21: erste externe Datenleitung
- 22: dritte Datenleitung
- 23: siebte Datenleitung
- 30: zweites funktionales Element
- 31: zweite externe Datenleitung
- 32: vierte Datenleitung
- 34: sechste Datenleitung
- 40: drittes funktionales Element
- 41: erste Datenausgabeleitung
- 42: zweite Datenausgabeleitung

- 101: Initialisierungsphase
- 102: Alignment-Phase
- 103: Inertialphase

## Patentansprüche

1. Verfahren zur Überprüfung einer inertialen Messeinheit von Fahrzeugen, insbesondere von Luftfahrzeugen, im stationären Zustand,
- wobei die inertiale Messeinheit (1)
• zumindest einen Beschleunigungssensor (10), der ein translatorisches eschleunigungssignat liefert, und
• zumindest einen Drehratensensor (11), der ein Drehratensignal liefert,
aufweist,
- wobei die inertiale Messeinheit (1) mit einer Navigationscomputer-Anordnung (2) mit zumindest einem Computer verbunden ist,
• die ein erstes funktionales Element (20) aufweist, welches vom Beschleunigungssensor (10) gelieferte translatorische Beschleunigungssignale und vom Drehratensensor (11) gelieferte Drehratensignale als Eingangsdaten empfängt und verarbeitet,
• die ein zweites funktionales Element (30) aufweist, welches die Eingangsdaten vom ersten funktionalen Element (20) empfängt und verarbeitet, und
• die ein drittes funktionales Element (40) aufweist, welches die Eingangsdaten von der inertialen Messeinheit (1), vom ersten funktionalen Element (20) und vom zweiten funktionalen Element (30) empfängt und verarbeitet und Steuersignale an das zweite funktionale Element (30) liefert,
mit den Schritten:
a) Bereitstellung von Daten
• der aktuellen Position der inertialen Messeinheit (1) und
• der aktuellen Euler-Winkel als Information über die aktuelle Orientierung der inertialen Messeinheit (1) im Raum;
b) Initialisierung eines Strapdown-Algorithmus' mit den im Schritt a) bereitgestellten Daten der aktuellen Position, der aktuellen Euler-Winkel und der aktuellen Geschwindigkeit der inertialen Messeinheit relativ zur Erde im ersten funktionalen Element (20);
c) kontinuierliche Verarbeitung der translatorischen Beschleunigungsdaten und Drehratendaten der von der inertialen Messeinheit (1) kontinuierlich gelieferten Signale im ersten funktionalen Element (20) nach dem Strapdown-Algorithmus, um Daten für erdfeste Position, Geschwindigkeit und Euler-Winkel zu erhalten, und
c') kontinuierliche Lieferung dieser Daten an das zweite funktionale Element (30),
d) kontinuierliche Verarbeitung der vom ersten funktionalen Element (20) gelieferten Daten für Position, Geschwindigkeit und Euler-Winkel in dem vom zweiten funktionalen Element (30) gebildeten Kalman-Filter zur Fehlerabschätzung und Ermittlung der Beschleunigungsfehler und der Drehratenfehler für alle Raumachsen,
e) Bildung von Beschleunigungs-Korrekturwerten aus den Beschleunigungsfehlern und von Drehraten-Korrekturwerten aus den Drehratenfehlern im zweiten funktionalen Element (30),
f) Lieferung der Beschleunigungs-Korrekturwerte und der Drehraten-Korrekturwerte an das erste funktionale Element (20) zur Messwertkorrektur,
g) Wiederholung der Schritte c) bis f) für eine erste vorgegebene Zeitspanne, wobei die Beschleunigungs-Korrekturwerte und die Drehraten-Korrekturwerte in die kontinuierliche Verarbeitung im Schritt c) nach dem Strapdown-Algorithmus mit einfließen,
h) nach Ablauf der ersten vorgegebenen Zeitspanne Prüfung, ob sich die im Schritt d) ermittelten Beschleunigungsfehler und Drehratenfehler innerhalb vorgegebener Toleranzbereiche befinden und Ausgabe einer Fehlermeldung und Abbruch des Verfahrens, falls die Prüfung ergibt, dass zumindest einer der Fehler außerhalb des Toleranzbereichs liegt,
i) Abspeichern der sich ergebenden Daten der Beschleunigungsfehler mit deren Varianz und der Drehratenfehler mit deren Varianz in einer Speichereinheit und Fortführung des Verfahrens
**gekennzeichnet durch** die weiteren Schritte:
j) Lieferung der sich aus der aktuellen kontinuierlichen Verarbeitung im Schritt c) ergebenden Daten für Position, Geschwindigkeit und Euler-Winkel an das dritte funktionale Element (40) und Stoppen der Fehlerschätzung des Kalman-Filters,
k) Berechnung der Euler-Winkel-Änderungen und der Geschwindigkeitsänderungen innerhalb einer zweiten vorgegebenen Zeitspanne aus den in Schritt j) gelieferten Daten,
l) Ermittlung von Beschleunigungs-Summenfehlern **durch** Addition der im Schritt i) abgespeicherten Beschleunigungsfehler und der im Schritt k) berechneten Geschwindigkeitsänderungen und Ermittlung von Drehraten-Summenfehlern **durch** Addition der im Schritt i) abgespeicherten Drehratenfehler und der im Schritt k) berechneten Euler-Winkel-Änderungen im dritten funktionalen Element (40),
m) Prüfung, ob sich die im Schritt I) ermittelten Beschleunigungs-Summenfehler und Drehraten-Summenfehler innerhalb vorgegebener Toleranzbereiche befinden, oder nicht.

2. Verfahren nach Anspruch 1,
**dadurch gekennzeichnet,**
**dass** die inertiale Messeinheit (1) vor Durchführung des Schrittes a) annähernd horizontal ausgerichtet wird.

3. Verfahren nach einem der vorhergehenden Ansprüche,
**dadurch gekennzeichnet,**
**dass** während der im Schritt g) angegebenen Wiederholung nach einer vorgegebenen Zeit im Schritt c) geprüft wird, ob der durch den Strapdown-Algorithmus berechnete Rollwinkel beziehungsweise der durch den Strapdown-Algorithmus berechnete Nickwinkel jeweils in einem vorgegebenen Toleranzbereich um 0°, vorzugsweise im Bereich von ± 3°, liegt.

4. Verfahren nach einem der vorhergehenden Ansprüche,
**dadurch gekennzeichnet,**
**dass** während der im Schritt g) angegebenen Wiederholung nach einer vorgegebenen Zeit im Schritt c) geprüft wird, ob die durch den Strapdown-Algorithmus berechneten erdfesten Geschwindigkeiten in den drei Raumrichtungen in einem vorgegebenen Toleranzbereich um 0 m/sec., vorzugsweise im Bereich von ± 0,3 m/sec., liegt.

5. Verfahren nach einem der vorhergehenden Ansprüche,
**dadurch gekennzeichnet,**
**dass** im Schritt h) geprüft wird, ob die im zweiten funktionalen Element (30) vom Kaiman-Filter ermittelte Genauigkeit des Beschleunigungsfehlers, nämlich die Standardabweichung oder die Varianz, für die vertikale Beschleunigungs-Sensor-Achse (Z) unter einem vorgegebenen Schwellenwert liegt.

6. Verfahren nach einem der vorhergehenden Ansprüche,
**dadurch gekennzeichnet,**
**dass** im Schritt h) geprüft wird, ob die im zweiten funktionalen Element (30) vom Kalman-Filter ermittelte Genauigkeit des Drehratenfehlers, nämlich die Standardabweichung oder die Varianz, für die jeweilige horizontale Drehraten-Sensor-Achse (X, Y) unter einem definierten Schwellenwert liegt.

7. Verfahren nach einem der vorhergehenden Ansprüche,
**dadurch gekennzeichnet,**
**dass** im Schritt h) geprüft wird, ob die Beträge der vom zweiten funktionalen Element (30) im Kalman-Filter-ermittelten geschätzten Messfehler für die vertikale Beschleunigungs-Sensor-Achse (Z) unterhalb eines jeweiligen vorgegebenen Schwellenwerts liegen.

8. Verfahren nach einem der vorhergehenden Ansprüche,
**dadurch gekennzeichnet,**
**dass** im Schritt h) geprüft wird, ob die Beträge der vom zweiten funktionalen Element (30) im Kalman-Filter ermittelten geschätzten Messfehler für die jeweilige horizontale Drehraten-Sensor-Achse (X, Y) unterhalb eines jeweiligen vorgegebenen Schwellenwerts liegen.

9. Verfahren nach einem der vorhergehenden Ansprüche,
**dadurch gekennzeichnet,**
**dass** im Schritt h) geprüft wird, ob die im zweiten funktionalen Element (30) vom Kalman-Filter ermittelte Fehlergenauigkeit, nämlich die Standardabweichung oder die Varianz, für die jeweilige horizontale Beschleunigungs-Sensor-Achse (X, Y) in einem vorgegebenen Toleranzbereich um den jeweiligen im Schritt b) ermittelten Initialwert liegt.

10. Verfahren nach einem der vorhergehenden Ansprüche,
**dadurch gekennzeichnet,**
**dass** im Schritt h) geprüft wird, ob die im zweiten funktionalen Element (30) vom Kalman-Filter ermittelte Fehlergenauigkeit, nämlich die Standardabweichung oder die Varianz, für die vertikale Drehraten-Sensor-Achse (Z) in einem vorgegebenen Toleranzbereich um den jeweiligen im Schritt b) ermittelten Initialwert liegen.

11. Verfahren nach einem der vorhergehenden Ansprüche,
**dadurch gekennzeichnet,**
**dass** im Schritt i) auch die Euler-Winkel-Varianzen abgespeichert werden.

12. Verfahren nach einem der vorhergehenden Ansprüche,
**dadurch gekennzeichnet,**
**dass** die im Schritt k) berechnete Geschwindigkeits-Änderung in das Achsensystem der inertialen Messeinheit (1) transformiert und um einen Erdbeschleunigungs-Anteil, der sich aus dem ermittelten Drehraten-Fehler ergibt, korrigiert wird.

13. Verfahren nach einem der vorhergehenden Ansprüche,
**dadurch gekennzeichnet,**
**dass** nach dem Schritt m) die folgenden zusätzlichen Schritte durchgeführt werden:
m1) Berechnung der Differenz zwischen der vom Beschleunigungssensor (10) durchschnittlich gemessenen Gesamt-Beschleunigung und der Erdbeschleunigung,
m2) Berechnung des resultierenden Gesamt-Beschleunigungs-Fehlers aufgrund der Beschleunigungs-Summenfehler,
m3) Prüfung, ob sich die Differenz zwischen der im Schritt m1) errechneten Differenz und dem im Schritt m2) errechneten Gesamt-Beschleunigungs-Fehler innerhalb eines vorgegebenen Toleranzbereichs befindet.

14. Verfahren nach einem der vorhergehenden Ansprüche,
**dadurch gekennzeichnet,**
**dass** nach dem Schritt m) die folgenden zusätzlichen Schritte durchgeführt werden:
m1') Berechnung der Differenz zwischen der vom Drehratenssensor (10) durchschnittlich gemessenen Gesamt-Drehrate und der Erdrotation,
m2') Berechnung des resultierenden Gesamt-Drehraten-Fehlers aufgrund der Drehraten-Summenfehler,
m3') Prüfung, ob sich die Differenz zwischen der im Schritt m1') errechneten Differenz und dem im Schritt m2') errechneten Gesamt-Drehraten-Fehler innerhalb eines vorgegebenen Toleranzbereichs befindet.

15. Verfahren nach einem der vorhergehenden Ansprüche,
**dadurch gekennzeichnet,**
**dass** dann, wenn wenigstens eine der in den Schritten m), m3) oder m3') durchgeführten Prüfungen scheitert, der Verfahrensablauf abgebrochen und eine entsprechende Fehlermeldung ausgegeben wird.

16. Verfahren nach einem der Ansprüche 1 bis 14,
**dadurch gekennzeichnet,**
**dass** dann wenn alle im Schritt m) beziehungsweise in den Schritten m) und m3) oder m) und m3') beziehungsweise in den Schritten m), m3) und m3') durchgeführten Prüfungen erfolgreich durchlaufen wurden, eine entsprechende Freigabemeldung ausgegeben wird.

## Claims

1. Method for checking an inertial measuring unit of vehicles, in particular of aircraft, in the stationary state,
- the inertial measuring unit (1) having
• at least one acceleration sensor (10) which provides a translatory acceleration signal, and
• at least one rate-of-rotation sensor (11) which provides a rate-of-rotation signal,
- the inertial measuring unit (1) being connected to a navigation computer arrangement (2) having at least one computer,
• which arrangement has a first functional element (20) which receives and processes translatory acceleration signals provided by the acceleration sensor (10) and rate-of-rotation signals provided by the rate-of-rotation sensor (11) as input data,
• which arrangement has a second functional element (30) which receives and processes the input data from the first functional element (20), and
• which arrangement has a third functional element (40) which receives and processes the input data from the inertial measuring unit (1), from the first functional element (20) and from the second functional element (30) and provides the second functional element (30) with control signals,
said method having the steps of:
a) providing data
• relating to the current position of the inertial measuring unit (1) and
• relating to the current Euler angles as information relating to the current orientation of the inertial measuring unit (1) in space;
b) initializing a strapdown algorithm with the data relating to the current position, the current Euler angles and the current speed of the inertial measuring unit relative to the Earth, which are provided in step a), in the first functional element (20);
c) continuously processing the translatory acceleration data and rate-of-rotation data in the signals continuously provided by the inertial measuring unit (1) in the first functional element (20) according to the strapdown algorithm in order to obtain data for the Earth-fixed position, speed and Euler angles, and
c') continuously providing the second functional element (30) with these data,
d) continuously processing the data relating to the position, speed and Euler angles, which are provided by the first functional element (20), in the Kalman filter formed by the second functional element (30) for the purpose of error estimation and for the purpose of determining the acceleration errors and the rate-of-rotation errors for all spatial axes,
e) forming acceleration correction values from the acceleration errors and forming rate-of-rotation correction values from the rate-of-rotation errors in the second functional element (30),
f) providing the first functional element (20) with the acceleration correction values and the rate-of-rotation correction values for the purpose of measured value correction,
g) repeating steps c) to f) for a first predefined period of time, the acceleration correction values and the rate-of-rotation correction values being concomitantly included in the continuous processing in step c) according to the strapdown algorithm,
h) checking, after the first predefined period of time has elapsed, whether the acceleration errors and rate-of-rotation errors determined in step d) are within predefined tolerance ranges and outputting an error message and terminating the method if the check reveals that at least one of the errors is outside the tolerance range,
i) storing the resultant data relating to the acceleration errors with their variance and the rate-of-rotation errors with their variance in a memory unit and continuing the method, **characterized by** the further steps of:
j) providing the third functional element (40) with the data relating to the position, speed and Euler angles, which result from the current continuous processing in step c), and stopping the error estimation of the Kalman filter,
k) calculating the Euler angle changes and the speed changes within a second predefined period of time from the data provided in step j),
l) determining acceleration accumulative errors by adding the acceleration errors stored in step i) and the speed changes calculated in step k) and determining rate-of-rotation accumulative errors by adding the rate-of-rotation errors stored in step i) and the Euler angle changes calculated in step k) in the third functional element (40),
m) checking whether or not the acceleration accumulative errors and rate-of-rotation accumulative errors determined in step 1) are within predefined tolerance ranges.

2. Method according to Claim 1,
**characterized in that**
the inertial measuring unit (1) is oriented in an approximately horizontal manner before step a) is carried out.

3. Method according to one of the preceding claims,
**characterized in that**
during the repetition stated in step g), a check is carried out after a predefined time in step c) in order to determine whether the roll angle calculated by the strapdown algorithm or the pitch angle calculated by the strapdown algorithm is respectively in a predefined tolerance range around 0°, preferably in the range of ± 3°.

4. Method according to one of the preceding claims,
**characterized in that**
during the repetition stated in step g), a check is carried out after a predefined time in step c) in order to determine whether the Earth-fixed speeds calculated by the strapdown algorithm in the three spatial directions are in a predefined tolerance range around 0 m/sec, preferably in the range of ± 0.3 m/sec.

5. Method according to one of the preceding claims,
**characterized in that**
a check is carried out in step h) in order to determine whether the accuracy of the acceleration error, as determined in the second functional element (30) by the Kalman filter, namely the standard deviation or variance, for the vertical acceleration sensor axis (Z) is below a predefined threshold value.

6. Method according to one of the preceding claims,
**characterized in that**
a check is carried out in step h) in order to determine whether the accuracy of the rate-of-rotation error, as determined in the second functional element (30) by the Kalman filter, namely the standard deviation or variance, for the respective horizontal rate-of-rotation sensor axis (X, Y) is below a defined threshold value.

7. Method according to one of the preceding claims,
**characterized in that**
a check is carried out in step h) in order to determine whether the magnitudes of the estimated measurement errors for the vertical acceleration sensor axis (Z), as determined by the second functional element (30) in the Kalman filter, are below a respective predefined threshold value.

8. Method according to one of the preceding claims,
**characterized in that**
a check is carried out in step h) in order to determine whether the magnitudes of the estimated measurement errors for the respective horizontal rate-of-rotation sensor axis (X, Y), as determined by the second functional element (30) in the Kalman filter, are below a respective predefined threshold value.

9. Method according to one of the preceding claims,
**characterized in that**
a check is carried out in step h) in order to determine whether the error accuracy determined in the second functional element (30) by the Kalman filter, namely the standard deviation or variance, for the respective horizontal acceleration sensor axis (X, Y) is in a predefined tolerance range around the respective initial value determined in step b).

10. Method according to one of the preceding claims,
**characterized in that**
a check is carried out in step h) in order to determine whether the error accuracy determined in the second functional element (30) by the Kalman filter, namely the standard deviation or variance, for the vertical rate-of-rotation sensor axis (Z) is in a predefined tolerance range around the respective initial value determined in step b).

11. Method according to one of the preceding claims,
**characterized in that**
the Euler angle variances are also stored in step i).

12. Method according to one of the preceding claims,
**characterized in that**
the speed change calculated in step k) is transformed into the axis system of the inertial measuring unit (1) and is corrected by a gravitational acceleration component which results from the rate-of-rotation error determined.

13. Method according to one of the preceding claims,
**characterized in that**
after step m), the following additional steps are carried out:
m1) the difference between the total acceleration measured on average by the acceleration sensor (10) and the gravitational acceleration is calculated,
m2) the resultant total acceleration error is calculated on the basis of the acceleration accumulative errors,
m3) a check is carried out in order to determine whether the difference between the difference calculated in step m1) and the total acceleration error calculated in step m2) is within a predefined tolerance range.

14. Method according to one of the preceding claims,
**characterized in that**
after step m), the following additional steps are carried out:
m1') the difference between the total rate of rotation measured on average by the rate-of-rotation sensor (11) and the Earth's rotation is calculated,
m2') the resultant total rate-of-rotation error is calculated on the basis of the rate-of-rotation accumulative errors,
m3') a check is carried out in order to determine whether the difference between the difference calculated in step m1') and the total rate-of-rotation error calculated in step m2') is within a predefined tolerance range.

15. Method according to one of the preceding claims,
**characterized in that**
the method sequence is terminated and a corresponding error message is output when at least one of the checks carried out in step m), m3) or m3') fails.

16. Method according to one of Claims 1 to 14,
**characterized in that**
a corresponding release message is output when all of the checks carried out in step m) or in steps m) and m3) or m) and m3') or in steps m), m3) and m3') were successful.

## Revendications

1. Procédé de contrôle d'une unité de mesure inertielle de véhicules, notamment d'aéronefs, à l'état stationnaire,
- l'unité de mesure inertielle (1) présentant
* au moins un capteur d'accélération (10) qui délivre un signal d'accélération translatoire et
* au moins un capteur de taux de rotation (11) qui délivre un signal de taux de rotation,
- l'unité de mesure inertielle (1) étant reliée à un arrangement d'ordinateur de navigation (2) comprenant au moins un ordinateur,
* qui présente un premier élément fonctionnel (20) qui reçoit et traite des signaux d'accélération translatoire reçus du capteur d'accélération (10) et des signaux de taux de rotation reçus du capteur de taux de rotation (11),
* qui présente un deuxième élément fonctionnel (30) qui reçoit et traite les données d'entrée du premier élément fonctionnel (20) et
* qui présente un troisième élément fonctionnel (40) qui reçoit et traite les données d'entrée de l'unité de mesure inertielle (1), du premier élément fonctionnel (20) et du deuxième élément fonctionnel (30) et qui délivre des signaux de commande au deuxième élément fonctionnel (30),
comprenant les étapes suivantes :
a) Mise à disposition de données
* de la position actuelle de l'unité de mesure inertielle (1) et
* de l'angle d' Euler actuel sous la forme d' une information sur l'orientation actuelle de l'unité de mesure inertielle (1) dans l'espace ;
b) Initialisation d'un algorithme de Strapdown avec les données mises à disposition à l'étape a) sur la position actuelle, l'angle d'Euler actuel et la vitesse actuelle de l'unité de mesure inertielle par rapport à la Terre dans le premier élément fonctionnel (20) ;
c) Traitement continu des données d'accélération translatoires et des données de taux de rotation des signaux délivrés continuellement par l'unité de mesure inertielle (1) dans le premier élément fonctionnel (20) d'après l'algorithme de Strapdown afin d'obtenir des données pour la position fixe par rapport à la Terre, la vitesse et l'angle d'Euler, et
c') Délivrance continue de ces données au deuxième élément fonctionnel (30),
d) Traitement continu des données de position, de vitesse et d'angle d'Euler délivrées par le premier élément fonctionnel (20) dans le filtre de Kalman formé dans le deuxième élément fonctionnel (30) pour estimation des erreurs et détermination de l'erreur d'accélération et de l'erreur de taux de rotation pour tous les axes de l'espace,
e) Calcul de valeurs de correction de l'accélération à partir des erreurs d'accélération et de valeurs de correction du taux de rotation à partir des erreurs de taux de rotation dans le deuxième élément fonctionnel (30),
f) Délivrance des valeurs de correction de l'accélération et des valeurs de correction du taux de rotation au premier élément fonctionnel (20) pour correction de la valeur mesurée,
g) Répétition des étapes c) à f) pendant un premier intervalle de temps prédéfini, les valeurs de correction de l'accélération et les valeurs de correction du taux de rotation intervenant également dans le traitement continu dans l'étape c) après l'algorithme de Strapdown,
h) Après écoulement du premier intervalle de temps prédéfini, contrôle si l'erreur d'accélération et l'erreur de taux de rotation déterminées à l'étape d) se trouvent à l'intérieur de plages de tolérance prédéfinies et émission d'un message d'erreur et interruption du procédé dans le cas où le contrôle indique qu'au moins l'une des erreurs se trouve en-dehors de la plage de tolérance,
i) Enregistrement des données obtenues de l'erreur d'accélération avec sa variance et de l'erreur de taux de rotation avec sa variance dans une unité de mémorisation et poursuite du procédé,
**caractérisé par** les étapes supplémentaires suivantes :
j) Délivrance des données de position, de vitesse et d'angle d'Euler résultant du traitement continu actuel à l'étape c) au troisième élément fonctionnel (40) et arrêt de l'estimation des erreurs du filtre de Kalman,
k) Calcul des modifications de l'angle d'Euler et des modifications de la vitesse pendant un deuxième intervalle de temps prédéfini à partir des données délivrées à l'étape j),
l) Détermination d'erreurs totales d'accélération en additionnant les erreurs d'accélération enregistrées à l'étape i) et les modifications de la vitesse calculées à l'étape k) et détermination d'erreurs totales de taux de rotation en additionnant les erreurs de taux de rotation enregistrées à l'étape i) et les modifications de l'angle d' Euler calculées à l'étape k) dans le troisième élément fonctionnel (40),
m) Vérification si l'erreur totale d'accélération et l'erreur totale de taux de rotation déterminées à l'étape 1) se trouvent ou non dans des plages de tolérance prédéfinies.

2. Procédé selon la revendication 1, **caractérisé en ce que** l'unité de mesure inertielle (1) est orientée à peu près horizontalement avant l'exécution de l'étape a).

3. Procédé selon l'une des revendications précédentes, **caractérisé en ce que** pendant la répétition indiquée à l'étape g), un contrôle est effectué après un certain temps dans l'étape c) pour vérifier si l'angle de roulis calculé par l'algorithme de Strapdown ou l'angle de tangage calculé par l'algorithme de Strapdown se trouve à chaque fois dans une plage de tolérances prédéfinie autour de 0°, de préférence dans la plage de ±3°.

4. Procédé selon l'une des revendications précédentes, **caractérisé en ce que** pendant la répétition indiquée à l'étape g), un contrôle est effectué après un certain temps dans l'étape c) pour vérifier si les vitesses fixes par rapport à la Terre calculées par l'algorithme de Strapdown dans les trois directions de l'espace se trouvent dans une plage de tolérances prédéfinie autour de 0 m/s, de préférence dans la plage de ±0,3 m/s.

5. Procédé selon l'une des revendications précédentes, **caractérisé en ce qu'**un contrôle est effectué à l'étape h) pour vérifier si la précision de l'erreur d'accélération déterminée par le filtre de Kalman dans le deuxième élément fonctionnel (30), à savoir l'écart type ou la variance, est inférieure à une valeur de seuil prédéfinie pour l'axe (Z) du capteur d'accélération verticale.

6. Procédé selon l'une des revendications précédentes, **caractérisé en ce qu'**un contrôle est effectué à l'étape h) pour vérifier si la précision de l'erreur de taux de rotation déterminée par le filtre de Kalman dans le deuxième élément fonctionnel (30), à savoir l'écart type ou la variance, est inférieure à une valeur de seuil donnée pour l'axe (X, Y) du capteur de taux de rotation horizontal correspondant.

7. Procédé selon l'une des revendications précédentes, **caractérisé en ce qu'**un contrôle est effectué à l'étape h) pour vérifier si les valeurs absolues de l'erreur de mesure estimée déterminée dans le filtre de Kalman par le deuxième élément fonctionnel (30) sont inférieures à une valeur de seuil prédéfinie correspondante pour l'axe (Z) du capteur d'accélération verticale.

8. Procédé selon l'une des revendications précédentes, **caractérisé en ce qu'**un contrôle est effectué à l'étape h) pour vérifier si les valeurs absolues de l'erreur de mesure estimée déterminée dans le filtre de Kalman par le deuxième élément fonctionnel (30) sont inférieures à une valeur de seuil donnée correspondante pour l'axe (X, Y) du capteur de taux de rotation horizontal correspondant.

9. Procédé selon l'une des revendications précédentes, **caractérisé en ce qu'**un contrôle est effectué à l'étape h) pour vérifier si la précision d'erreur déterminée par le filtre de Kalman dans le deuxième élément fonctionnel (30), à savoir l'écart type ou la variance, se trouve dans une plage de tolérance prédéfinie autour de la valeur initiale correspondante déterminée à l'étape b) pour l'axe (X, Y) du capteur d'accélération horizontale correspondant.

10. Procédé selon l'une des revendications précédentes, **caractérisé en ce qu'**un contrôle est effectué à l'étape h) pour vérifier si la précision d'erreur déterminée par le filtre de Kalman dans le deuxième élément fonctionnel (30), à savoir l'écart type ou la variance, se trouve dans une plage de tolérance prédéfinie autour de la valeur initiale correspondante déterminée à l'étape b) pour l'axe (Z) du capteur de taux de rotation vertical.

11. Procédé selon l'une des revendications précédentes, **caractérisé en ce que** les variances de l'angle d'Euler sont également enregistrées à l'étape i).

12. Procédé selon l'une des revendications précédentes, **caractérisé en ce que** la modification de la vitesse calculée à l'étape k) est transformée dans le système d'axes de l'unité de mesure inertielle (1) et corrigée d'une part d'accélération due à la gravité qui résulte de l'erreur déterminée du taux de rotation.

13. Procédé selon l'une des revendications précédentes, **caractérisé en ce que** les étapes supplémentaires suivantes sont exécutées après l'étape m) :
m1) Calcul de la différence entre l'accélération totale moyenne mesurée par le capteur d'accélération (10) et l'accélération due à la gravité,
m2) Calcul de l'erreur d'accélération totale résultante sur la base de l'erreur totale d'accélération,
m3) Vérification si la différence entre la différence calculée à l'étape m1) et l'erreur d'accélération totale calculée à l'étape m2) se trouve dans une plage de tolérance prédéfinie.

14. Procédé selon l'une des revendications précédentes, **caractérisé en ce que** les étapes supplémentaires suivantes sont exécutées après l'étape m) :
m1') Calcul de la différence entre le taux de rotation total moyen mesuré par le capteur de taux de rotation (10) et la rotation de la Terre,
m2') Calcul de l'erreur de taux de rotation total résultante sur la base de l'erreur totale de taux de rotation,
m3') Vérification si la différence entre la différence calculée à l'étape m1') et l'erreur de taux de rotation total calculée à l'étape m2') se trouve dans une plage de tolérance prédéfinie.

15. Procédé selon l'une des revendications précédentes, **caractérisé en ce que** lorsque au moins l'un des contrôles exécutés aux étapes m), m3 ou m3') échoue, le déroulement du procédé est interrompu et un message d'erreur correspondant est délivré.

16. Procédé selon l'une des revendications 1 à 14, **caractérisé en ce que** lorsque tous les contrôles exécutés à l'étape m) ou aux étapes m) et m3) ou m) et m3') ou encore aux étapes m), m3) et m3') aboutissent avec un résultat positif, un message de validation correspondant est délivré.
